# EUROPÄISCHE PATENTSCHRIFT

(11) **EP 0 818 164 B1**
(45) Veröffentlichungstag und Bekanntmachung des Hinweises auf die Patenterteilung: **03.04.2002**
(21) Anmeldenummer: 97111350.1
(22) Anmeldetag: 04.07.1997
(51) Int. Cl.: A47B 96/14, A47B 57/54, A47B 13/06, F16B 12/32

(54) **Tragsystem für Arbeitsmöbel**
Support system for work-table
Structure porteuse pour meuble de travail

(30) Priorität: 11.07.1996 DE 29612106 U
(43) Veröffentlichungstag der Anmeldung: 14.01.1998
(73) Patentinhaber: Knürr-Mechanik für die Elektronik AG, D-81829 Munchen (DE)
(72) Erfinder: Schmidt, Markus, 57518 Betzdorf (DE); Reiter, Johann, 94424 Arnstorf (DE)
(74) Vertreter: Heim, Hans-Karl, Dipl.-Ing.

(56) Entgegenhaltungen:
- EP-A- 0 670 125
- DE-A- 4 306 877
- DE-U- 1 919 678
- FR-A- 2 200 915

## Beschreibung

Die Erfindung betrifft ein Tragsystem für Arbeitsmöbel, insbesondere für Werkstattmöbel, gemäß dem Oberbegriff des Anspruchs 1.

Aus der DE-G 93 01 248.9 ist ein Arbeitsmöbel bekannt, bei welchem eine auf Tragarmen angeordnete Tischplatte auf Stützenfüßen abgestützt ist. Die Stützenfüße weisen wenigstens ein Vertikalprofil sowie einen bodenseitigen horizontalen Fußausleger auf. Die Vertikalprofile sind mit T-Nuten und mit einem zentralen Innenraum versehen, in welchem ein Innenrohr geführt ist. Das Innenrohr ist mit dem zugehörigen Tragarm der Tischplatte verbunden und kann zur Höhenverstellung der Tischplatte über eine Gleitführung vertikal verstellt werden.

Das Konstruktionskonzept dieses bekannten Arbeitsmöbels ermöglicht bereits eine variable Gestaltung von Arbeitsplätzen, beispielsweise die Anordnung mehrerer Arbeitsebenen. Außerdem ist eine nachträgliche Umrüstung mit Doppelstützfüßen und rückseitigen Fußauslegern durchführbar.

Als Werkstattmöbel ist das bekannte Arbeitsmöbel nur im begrenzten Umfang einzusetzen, da die erreichbare Stabilität und Variantenvielfalt nicht in jedem Fall den Anforderungen und Raumkonzepten entspricht. Außerdem gestattet das für die Stützenfüße verwendete Profil lediglich die Befestigung von Horizontal- und/oder Querträgern diametral zu den Längsseiten des Profils.

Aus der EP 0 670 125 A1 ist ein Tragsystem mit Vertikalträgern, welche als Kreuzprofil mit vier, in einem Winkel von jeweils 90° zueinander angeordneten Profilschenkeln ausgebildet sind. Die vier Profilschenkel sind glockenförmig ausgebildet und mit einer Grundfläche an jeweils einer abgerundeten Kante eines zentralen quadratischen Profilbereichs angeformt. Diese Ausbildung kann zu einer Schwächung des Strangprofils in diesen Bereichen führen und die Fixierung der unterschiedlichsten Konstruktionselemente relativ instabil machen.

Die Profilschenkel weisen Längsschlitze und einen im Querschnitt halbkreisförmigen, nach außen gerichteten Endbereich auf, welche zur Befestigung von Konstruktionselementen dienen. Zur Befestigung von Tragarmen, beispielsweise für Arbeitsflächen, ist ein Eingriffselement mit einer Schraubbohrung erforderlich. Die eigentliche Befestigung erfolgt mit Befestigungsschrauben und fluchtenden Bohrungen in den Tragarmen. Es muss als nachteilig angesehen werden, dass die Endbereiche der Tragarme komplementär zu den konkaven Seiten der Befestigungsschenkel ausgebildet werden müssen. Eine alternative Möglichkeit der Befestigung von Konstruktionselementen erfordert zusätzliche adapterähnliche Verbindungselemente und entsprechende Befestigungselemente, welche relativ aufwendig konstruiert sind.

Der Erfindung liegt die **Aufgabe** zugrunde, ein Tragsystem für Arbeitsmöbel, insbesondere für Werkstattmöbel zu schaffen, mit welchem außerordentlich hohe Stabilitätsanforderungen erfüllt werden und gleichzeitig eine besonders variable Gestaltung von Arbeitstischen und weiteren Werkstattmöbeln gewährleistet ist.

Erfindungsgemäß wird die Aufgabe durch die Merkmale des Anspruchs 1 gelöst. Zweckmäßige und vorteilhafte Ausgestaltungen finden sich in den Unteransprüchen und in der Figurenbeschreibung.

Die Erfindung geht von der Überlegung aus, ein Tragsystem mit einem Profil gemäß den Merkmalen des Anspruchs 1 zu schaffen, welches eine direkte und indirekte Befestigung bzw. Anordnung von Konstruktionselementen, beispielsweise Trägern, Stützen oder Ausstattungselementen, am gesamten Umfang und in jeder Höhe gewährleistet. Auf der Grundlage eines derartigen Profils, welches wenigstens als Vertikalträger eingesetzt wird, kann ein stabiles und variantenreiches Arbeitsmöbel, insbesondere ein Werkstattmöbel, geschaffen werden.

Es ist vorteilhaft, dass die als ein Kreuzprofil ausgebildeten Vertikalträger aus Aluminium bestehen können und auch die Befestigungsblöcke insbesondere Aluminiumgußteile sein können.

Die Befestigungsblöcke sind zur Fixierung von Horizontalträgern und/ oder Querträgern und/oder weiteren Möbelelementen, welche bevorzugt ebenfalls aus Aluminium bestehen, vorgesehen und ermöglichen eine stabile, höhenverstellbare und/oder verschwenkbare Anordnung der Elemente des Systems.

Die senkrecht zueinander angeordneten bzw. sich kreuzenden Profilschenkel des Kreuzprofils sind als Zentrum oder Knoten für in vier wählbare Richtungen anzuordnende Tragelemente oder dgl. und zur erfindungsgemäßen Fixierung der Befestigungsblöcke ausgebildet.

Es ist zweckmäßig, wenn die Profilschenkel die gleiche Länge und in Längsrichtung angeordnete Befestigungsöffnungen zur Aufnahme von Befestigungselementen zur Fixierung der Befestigungsblöcke und/oder der Horizontal- und/oder Querträger aufweisen. Diese werden zwischen den Profilschenkeln in Zwischenräumen angeordnet und bevorzugt mittels Befestigungsschrauben an einem zugehörigen Profilschenkel befestigt.

Erfindungsgemäß ist in jedem Profilschenkel eines Kreuzprofils wenigstens eine T-Nut mit einem in Längsrichtung verlaufenden Nutschlitz ausgebildet. In die T-Nuten können zur Sicherung von Befestigungsschrauben inbesondere Federmuttern als Sicherungselemente eingeführt werden, welche mit den Befestigungsschrauben, die beispielsweise durch einen Befestigungsblock geführt sind, zusammenwirken und den Befestigungsblock sicher und stabil am Kreuzprofil halten.

Besonders vorteilhaft ist es, daß die Befestigungsblöcke in einer horizontalen und in einer vertikalen Anordnung in einem von zwei Profilschenkeln begrenzten Zwischenraum angeordnet und fixiert werden können. In einer horizontalen Anordnung können kreisbogenartig ausgebildetete Außenflächen der Befestigungsblöcke mit konvex gebogenen Stirnflächen der Profilschenkel des Kreuzprofils eine kreisförmige Außenkontur bilden, da die Befestigungsblöcke etwa als Viertel-Kreiszylinder mit zwei parallel angeordneten kreissektorartigen Deck- und Grundflächen ausgebildet sind. Ein Befestigungsblock weist außerdem zwei Anlageflächen auf, die rechtwinklig zueinander verlaufen und bei einer horizontalen Anordnung des Befestigungsblocks in einem Zwischenraum des Kreuzprofils an jeweils einem Profilschenkel anliegen.

Die Befestigungsblöcke weisen eine erste und zweite Bohrung auf, welche eine Befestigung in horizontaler und vertikaler Anordnung ermöglichen. Dabei ist in der horizontalen Anordnung ein Befestigungselement durch eine erste Bohrung, welche von der Außenfläche durch eine Anlagefläche bis in die T-Nut eines Profilschenkels reicht, geführt und gesichert.

In einer vertikalen Anordnung liegt eine Parallelfläche an einem Profilschenkel und eine Anlagefläche an dem zweiten Profilschenkel an. Ein Befestigungselement wird durch die zweite Bohrung, welche diametral zur ersten Bohrung und zwischen den zwei Parallelflächen verläuft, geführt. Die Befestigungsblöcke und deren Bohrungen sind derart dimensioniert, daß sowohl in horizontaler als auch in vertikaler Anordnung die erste und zweite Bohrung mit dem zugehörigen Nutschlitz fluchten. Die Nutschlitze sind dabei derart in dem Kreuzprofil ausgebildet, daß in jedem Zwischenraum ein Nutschlitz und in einer gleichen Öffnungsrichtung in einem Profilschenkel angeordnet ist.

Zweckmäßigerweise ist das Kreuzprofil mit einer Mittenbohrung versehen, in welche ein Stab oder eine Stütze eingeführt werden kann, die beispielsweise zur Ausbildung einer zweiten oder auch dritten Arbeitsebene dienen kann.

Die in den Zwischenräumen fixierten Befestigungsblöcke können innerhalb eines als Hohlprofil ausgebildeten Horizontal- oder Querträgers angeordnet sein, wobei diese ebenfalls aus einem Kreuzprofil gefertigt sein können.

In einer vorteilhaften, stabilen Konstruktion ist ein Horizontal- oder Querträger zwischen zwei Befestigungsblöcken angeordnet und befestigt. Weiterhin kann ein Quer- oder Horizontalträger auf einem Befestigungsblock aufliegend befestigt, z.B. festgeschraubt werden.

Indem in jedem der vier Zwischenräume des Kreuzprofils Horizontal- und/oder Querträger mit ihren Endbereichen angeordnet werden, stellen die Kreuzprofile Knotenpunkte für ein Tischsystem bzw. Möbelsystem dar. Dabei können die Horizontal- und/oder Querträger stirnseitig oder seitlich an den Profilschenkeln des Kreuzprofils befestigt werden, so daß unterschiedliche Varianten von Tragsystemen realisierbar sind.

Es ist zweckmäßig, die Befestigungsblöcke mit Halteelementen zu versehen, welche zapfenartig oder als Bolzen überstehen und in die Horizontal- und/oder Querträger eingeführt werden können. Die horizontal und vertikal in den Zwischenräumen fixierbaren Befestigungsblöcke können mit Halteelementen, welche lösbar in komplementär ausgebildeten Bohrungen der Befestigungsblöcke aufgenommen sind, versehen sein, so daß die variable horizontale oder vertikale Anordnung nicht behindert wird. Die Halteelemente können alternativ auch an den Endbereichen der zwischen oder auf den Befestigungsblöcken gehaltenen Trägern etc. angeordnet werden.

Wenn zwischen zwei Befestigungsblöcken mit zueinander gerichteten Bolzen oder Zapfen als Halte- oder Eingriffselemente ein Horizontal- oder Querträger angeordnet ist, kann von den Halte- oder Eingriffselementen eine Dreh- oder Schwenkachse definiert sein, um welche der Horizontal- oder Querträger verschwenkbar ist. Es kann dann ein Werkstattmöbelsystem mit Zusatztischen und Zusatzelementen in jeder beliebigen Winkelausrichtung angebaut werden.

Neben dieser indirekten Befestigung eines Horizontal- und/ oder Querträgers oder eines beliebigen weiteren Möbelelementes ermöglicht die Ausbildung des Kreuzprofils und der Profilschenkel auch eine direkte Befestigung.

Es bedarf dazu lediglich entsprechender Bohrungen zur Führung eines Befestigungselementes bzw. einer Befestigungsschraube, welche in einen Nutschlitz einführbar und durch ein entsprechendes Element in der T-Nut sicherbar ist.

Zweckmäßig ist es, die Befestigungsblöcke und Querschnitte der zu befestigenden Horizontal- und/oder Querträger aufeinander abzustimmen, so daß beispielsweise ein Befestigungsblock auch in den Endbereich eines Horizontal- oder Querträgers einführbar und verdeckt fixierbar ist.

Grundsätzlich kann in einer Höhe jeder der vier Zwischenräume des Kreuzprofils mit einem Quer- und/oder Horizontalträger versehen sein. Die Zwischenräume können jedoch auch als Kabelkanäle dienen, wobei es besonders vorteilhaft ist, daß Kabelhalterungen im Bereich der Nutöffnungen fixiert werden können.

In einer besonders zweckmäßigen Ausbildung sind radial außen und nahezu angrenzend an die konvexen Stirnbereiche der Profilschenkel Nuten als längsorientierte Aussparungen vorgesehen, die der Halterung einer Abdeckung dienen. Eine Abdeckung kann besonders gestaltet und beispielsweise mit dem Firmennamen und/oder den Firmenfarben versehen sein.

Besonders vorteilhaft ist eine halbkreisförmige Abdeckung oder eine Abdeckung, welche einen Zwischenraum über nahezu die gesamte Länge des Vertikalträgers abdeckt. Wenn in diesen Abdeckungen z. B. randseitige Ausnehmungen vorgesehen sind, besteht die Möglichkeit, Kabel, welche in den Zwischenräumen geführt sind, in der jeweiligen Höhe aus der vertikalen Führung in eine horizontale Führung umzulenken. Die Abdeckungen können vorzugsweise in U-förmige Längsnuten eingeklemmt oder eingerastet werden.

Für besonders stabile Tragsysteme können Horizontal- und/ oder Querträger derart ausgebildet sein, daß sie mit zwei Endbereichen in zwei benachbarte Zwischenräume eines Kreuzprofils reichen. Die Befestigung an jeweils einem Profilschenkel kann mit Befestigungsblöcken oder aber mit Winkelprofilen erfolgen, welche insbesondere verdeckt angeordnet und an den Profilschenkeln befestigt werden.

In einer Weiterbildung des erfindungsgemäßen Tragsystems ist eine schellenartige Adaptereinrichtung vorgesehen, welche ein Kreuzprofil und insbesondere ein Kreuzprofil mit in diesem Bereich befestigten horizontal angeordneten Befestigungsblöcken, klammer- oder hülsenartig umgibt und fixiert wird.

An dem hülsen- oder klammerartigen Adapter ist zweckmäßigerweise ein Aufnahmebereich vorgesehen, der von zwei parallelen und nach außen gerichteten Befestigungsflanschen gebildet sein kann.

Der Aufnahmebereich ist komplementär zu Endbereichen einer Strebe, einer Stütze oder eines zusätzlichen Trägers bzw. Möbelelementes ausgebildet und ermöglicht die Anordnung einer zusätzlichen Arbeitsfläche, Montageebene oder dergleichen.

Besondere Vorteile resultieren aus einer möglichen Ausrichtung des Aufnahmebereichs in jedem beliebigen Winkel, so daß je nach den räumlichen Gegebenheiten ein entsprechender Anbau und Aufbau eines Werkstattmöbels realisierbar ist.

Für besonders hohe Lasten können Basiselemente vorgesehen werden, welche z.B. nahezu den gleichen Querschnitt aufweisen wie die Befestigungselemente. Die Basiselemente werden unterhalb der Befestigungsblöcke angeordnet und weisen einen radialen Überstand im Vergleich zu den Befestigungsblöcken auf. Durch diesen radialen Überstand liegen die hülsen- oder klammerartigen Adapterelemente auf und werden somit, insbesondere bei Schwenkbewegungen, zusätzlich und sicher abgestützt.

Wesentliche Vorteile des erfindungsgemäßen Tragsystems sind eine kostengünstige Herstellung der Träger und insbesondere der Kreuzprofile aus Aluminiumstrangpreßprofilen, eine variantenreiche Gestaltung eines darauf aufgebauten Möbelsystems und eine stufenlose Höhenverstellbarkeit und/oder Verschwenkbarkeit der an den Kreuzprofilen indirekt über Befestigungsblöcke befestigten Träger bzw. Möbelelemente. Eine integrierte Kabelführung und Abdeckung der Zwischenräume mit einer besonders gestalteten Blende gewährleistet einen besonders vorteilhaften Gesamteindruck eines auf der Basis des erfindungsgemäßen Tragsystems ausgebildeten Werkstattmöbels.

Ein Ausführungsbeispiel der Erfindung wird nachstehend anhand einer Zeichnung weiter erläutert; in dieser zeigen in stark schematisierter Weise:
- Fig. 1: eine perspektivische ausschnittsweise Darstellung eines erfindungsgemäßen Tragsystems mit einem erfindungsgemäßen Kreuzprofil;
- Fig. 2: einen Schnitt nach Linie II-II gemäß Fig. 1;
- Fig. 3: eine Draufsicht auf ein Kreuzprofil mit einem horizontal angeordneten Befestigungsblock in einem Zwischenraum;
- Fig. 4: eine perspektivische Darstellung eines Befestigungsblocks;
- Fig. 5: ein Kreuzprofil als Vertikalträger mit einem schwenkbaren Möbelelement;
- Fig. 6: eine schematische Darstellung eines Kreuzprofils mit stirnseitig und seitlich an den Profilschenkeln befestigten Horizontal- und Querträgern;
- Fig. 7: eine zweite Variante für stirnseitig und seitlich an einem Kreuzprofil befestigte Horizontalträger und Vertikalträger;
- Fig. 8: eine perspektivische Darstellung eines Kreuzprofils mit Kabelkanal und Abdekkung;
- Fig. 9: eine Draufsicht auf ein Kreuzprofil gemäß Fig. 8;
- Fig. 10: eine weitere Variante eines erfindungsgemäßen Tragsystems mit Doppelquerträgern und Vertikalträgern;
- Fig. 11: einen Querschnitt durch einen Doppelquerträger, welcher an einem Kreuzprofil befestigt ist;
- Fig. 12: eine perspektivische Darstellung eines Endbereiches eines Doppelquerträgers;
- Fig. 13: eine perspektivische Darstellung eines Adapters im Bereich eines Querprofils;
- Fig. 14: einen in einem Zwischenraum eines Kreuzprofils angeordneten Befestigungsblock mit einem Basiselement;
- Fig. 15: einen Querschnitt durch ein Kreuzprofil mit Befestigungsblöcken und Adapterelement;
- Fig. 16: eine perspektivische Darstellung eines Befestigungselementes mit Basiselement und
- Fig. 17: einen Querschnitt einer Ausbildungsvariante eines Kreuzprofils.

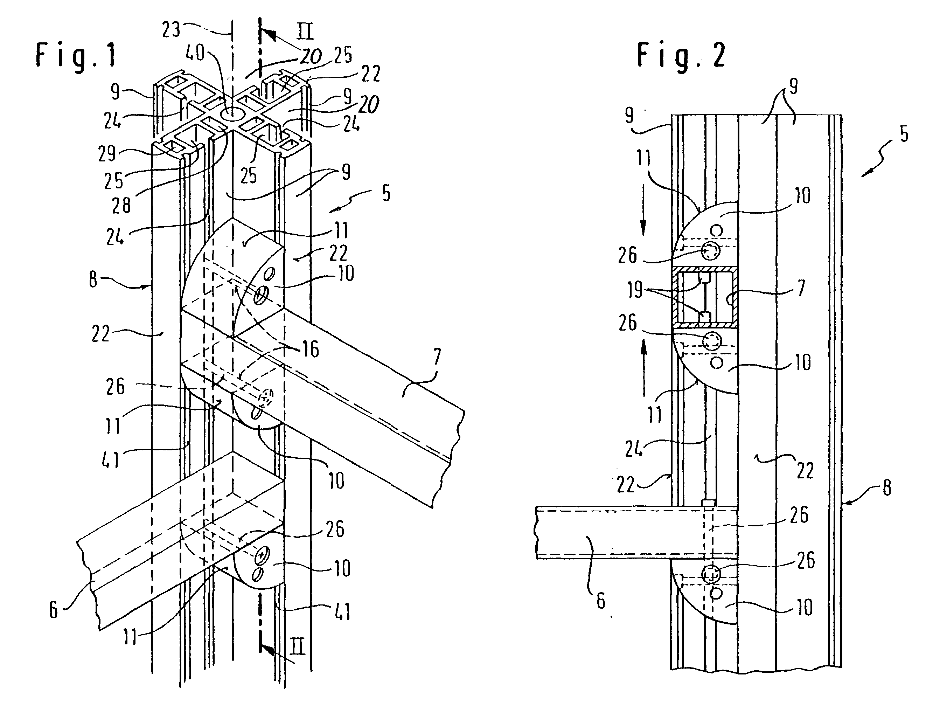

Figur 1 zeigt eine perspektivische Darstellung eines erfindungsgemäßen Tragsystems in einer ausschnittsweisen Darstellung mit einem Vertikalträger 5 und einen daran befestigten Querträger 7 und Horizontalträger 6.

Der Querträger 7 und der Horizontalträger 6 sind an einem Kreuzprofil 8 mit Hilfe von Befestigungsblöcken 10, welche vertikal angeordnet sind, befestigt. Sowohl das Kreuzprofil 8 des Vertikalträgers 5 als auch der Horizontalträger 6 und der Querträger 7 sowie die Befestigungselemente 10 sind aus Aluminium gefertigt und stellen Strangpreßprofile bzw. Gußstücke dar.

Das Kreuzprofil 8 weist vier Profilschenkel 9, welche im Prinzip identisch ausgebildet sind, sowie eine Mittenbohrung 40 auf, welche kreisrund mit einem die Längsachse 23 definierenden Mittelpunkt ausgebildet ist. Das als Hohlprofil ausgebildete Kreuzprofil 8 ist im Bereich der Profilschenkel 9 jeweils mit einer inneren und äußeren, etwa rechteckigen Bohrung 28, 29 versehen.

Zwischen diesen in Längsrichtung verlaufenden Bohrungen 28, 29 ist in jedem Profilschenkel 9 eine T-Nut 25 ausgebildet, deren Nutöffnung 21 zu einem Zwischenraum 20 gerichtet ist und als eine Befestigungsöffnung 24 zur Aufnahme eines Befestigungselementes 26, insbesondere einer Befestigungsschraube, dient. Die Sicherung der Befestigungselemente 26 kann mit einer Mutter, insbesondere einer Federmutter (nicht dargestellt), innerhalb der T-Nuten 25 erfolgen.

In Figur 1 sind zwischen zwei Befestigungsblöcken 10 ein Querträger 7 und auf einem weiteren, unteren Befestigungsblock 10 aufliegend, ein Horizontalträger 6 mit ihren Endbereichen gezeigt. Sowohl die Befestigungsblöcke 10 als auch die Horizontal- bzw. Querträger 6, 7 liegen jeweils mit zwei Flächen bzw. Seiten an den Profilschenkeln 9 an. Die Befestigung erfolgt indirekt über die Befestigungsblöcke 10, welche zur Aufnahme und Führung von Befestigungselementen 26 eine erste und zweite Bohrung 15, 16 aufweisen.

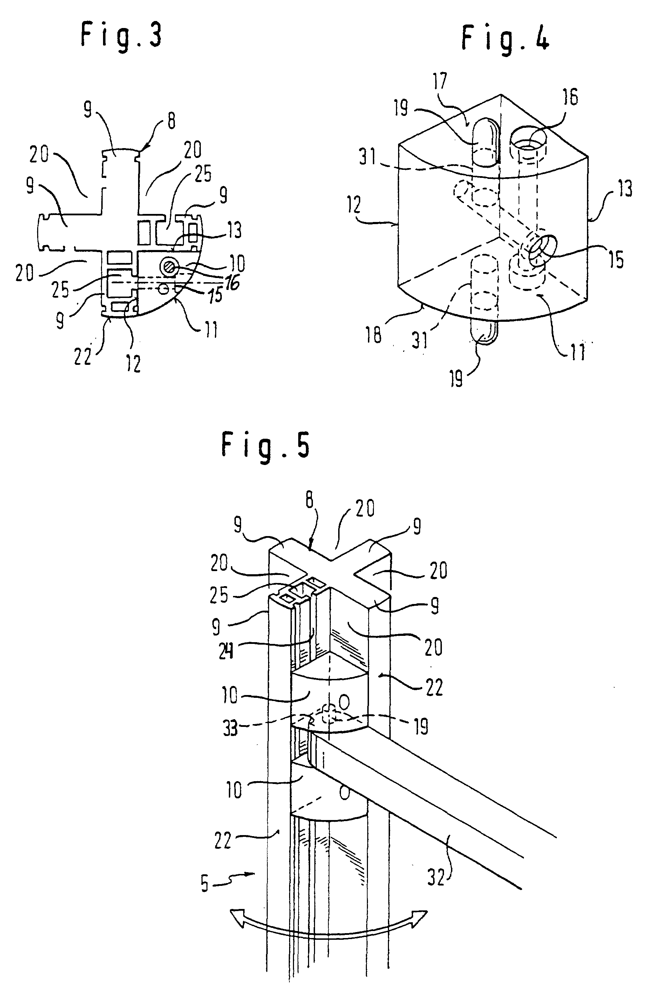

Die Befestigungsblöcke 10 sind in Figur 1 und in der entsprechenden Schnittdarstellung der Figur 2 vertikal angeordnet und fixiert. In dieser Anordnung wird durch eine zweite Bohrung 16, die zwischen zwei Parallelflächen 17, 18 verläuft (s. auch Fig. 4), eine Befestigungsschraube als Befestigungselement 26 bis in die T-Nut 25 geführt.

Figur 2 verdeutlicht die Halterung des Querträgers 7, welcher zwischen zwei Befestigungsblöcken 10 eingespannt ist, mit Hilfe von überstehenden Halte- oder Eingriffselementen 19. Im Beispiel nach Figur 2 ragen ein Halteelement 19 eines oberen Befestigungsblocks 10 und ein Halteelement 19 eines unteren Befestigungsblocks 10 in einen als Hohlprofil ausgebildeten Querträger 7 und sichert dessen Position.

Der untere Horizontalträger 6 wird mit dem darunter angeordneten Befestigungsblock 10 mit einem Befestigungselement 26, insbesondere mit einer Schraube, an dem Befestigungsblock 10 fixiert.

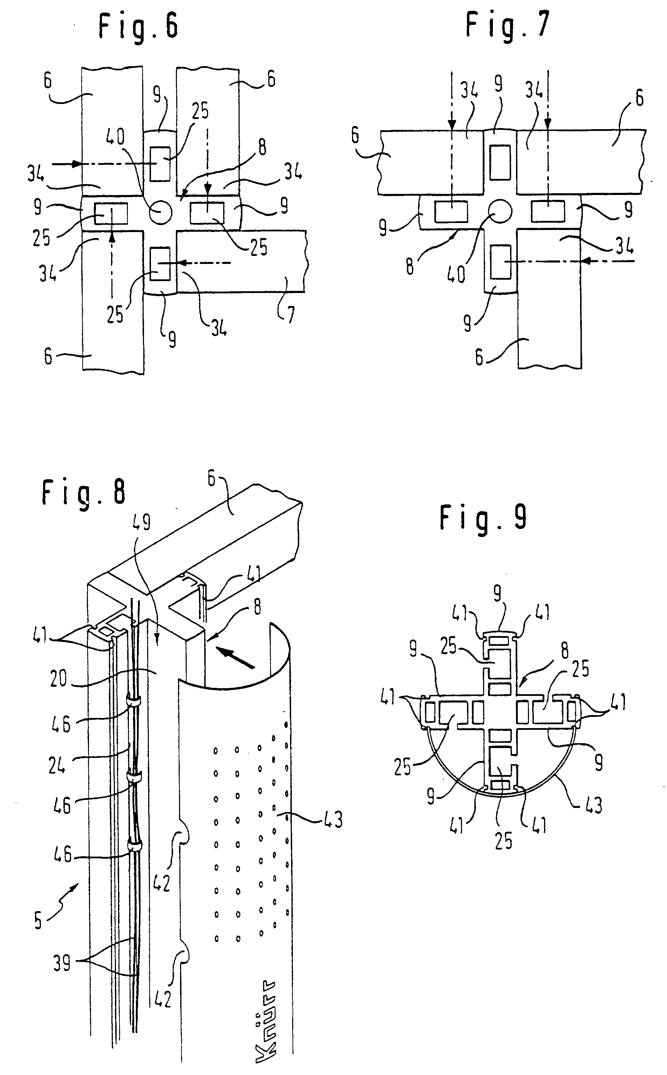

Die Kreuzprofile 8 bzw. deren Profilschenkel 9 weisen konvex ausgebildete Stirnflächen 22 auf, welche von Längsausnehmungen, z.B. U-förmig ausgebildeten Längsnuten 41, seitlich begrenzt werden. Die U-förmigen Nuten 41 dienen zur klemm- oder einrastbaren Aufnahme einer Abdeckung 43 (siehe Fig. 8 und 9).

In den Figuren 3, 4 und 5 sind die Befestigungsblöcke 10 jeweils in einer horizontalen Anordnung gezeigt. Es wird deutlich, daß die Befestigungsblöcke 10 in der horizontalen Anordnung komplementär zu den Zwischenräumen 20 des Kreuzprofils 8 ausgebildet sind und eine Außenfläche 11 aufweisen, die in dieser Ausbildungsform mit den konvexen Stirnflächen 22 der Profilschenkel 9 einen kreisrunden Umfang eines Kreuzprofils 8 bzw. eines Vertikalträgers 5 bilden. Möglich ist auch eine elliptische Kontur, welche von unterschiedlich langen Profilschenkeln gebildet wird, die sich senkrecht und insbesondere mittig kreuzen.

Bei dem in Figur 3 gezeigten Querschnitt sind lediglich zwei Profilschenkel 9 vollständig dargestellt. Strichpunktierte Linien geben die Befestigungsmöglichkeiten an und zeigen, daß die Bohrungen 15, 16 in einem Befestigungsblock 10, welche diametral zueinander verlaufen, je nach vertikaler oder horizontaler Anordnung der Befestigungsblöcke 10 mit der Nutöffnung 21 des zugehörigen Profilschenkels 9 fluchten.

Im Querschnitt ist ein horizontal angeordneter Befestigungsblock 10 kreissektorartig ausgebildet. Zwei Anlageflächen 12, 13 verlaufen rechtwinklig zueinander und liegen jeweils an einem Profilschenkel 9 an. Zwei Parallelflächen 17, 18 sind mit Bohrungen 31 versehen, welche zur Aufnahme von Halte- oder Eingriffselementen 19 dienen. Diese Halteelemente 19 sind in diesem Beispiel lösbar in den Bohrungen 31 angeordnet und dienen der Befestigung von Horizontalträgern 6 oder Querträgern 7.

Eine verschwenkbare Anordnung eines Möbelelementes 32 mit Hilfe der Halte- oder Eingriffselemente 19 ist in Figur 5 gezeigt. Das Möbelelement 32 weist einen abgerundeten Stirnbereich 33 auf und Bohrungen (nicht dargestellt), in welche die Halteelemente 19 des oberen Befestigungsblockes und des unteren Befestigungsblockes 10 unter Ausbildung einer vertikalen Schwenkachse eingreifen.

Bei der in Fig. 5 dargestellten Anordnung ist eine Schwenkbewegung von etwa 90° möglich. Die weiteren zu den vorangegangenen Figuren identischen Merkmale sind mit identischen Bezugszeichen versehen.

Neben der Verschwenkbarkeit um eine von den Halteelementen 19 definierte vertikale Achse sind die Querträger 7, Horizontalträger 6 und zusätzliche Möbelelemente 32 höhenverstellbar und insbesondere stufenlos fixierbar.

Aus den Figuren 6 und 7 gehen die möglichen stirnseitigen oder seitlichen Anordnungen und Befestigungen von Horizontalträgern 6 und Vertikalträgern 7 hervor. Die Befestigung der Endbereiche 34 erfolgt in der Regel indirekt mit Hilfe der Befestigungsblöcke 10 oder auch direkt und ist jeweils mit gestrichelten Pfeillinien angedeutet.

Die Kreuzprofile 8 sind schematisch dargestellt und weisen für identische Merkmale identische Bezugszeichen auf.

Figur 8 und die weitgehend entsprechende Querschnittsdarstellung der Fig. 9 zeigen einen Vertikalträger 5 mit Kreuzprofil 8 und einer halbrunden Abdeckung 43. In einem hinteren Zwischenraum 20 ist ein Horizontalträger 6 aufgenommen und befestigt, während ein vorderer Zwischenraum 20 als Kabelkanal 49 dient. Zu diesem Zweck sind Kabelhalterungen 46 im Nutschlitz 24 befestigt.

Die Abdeckung 43 ist halbkreisförmig ausgebildet und mit einem Firmenlogo versehen. Ausnehmungen 42 in Seitenbereichen der Abdeckung 43 ermöglichen das Ein- und Ausführen von Kabelleitungen 39.

In Fig. 9 ist die Abdeckung 43 in U-förmige Nuten 41 der Profilschenkel 9 eingerastet oder eingeklemmt.

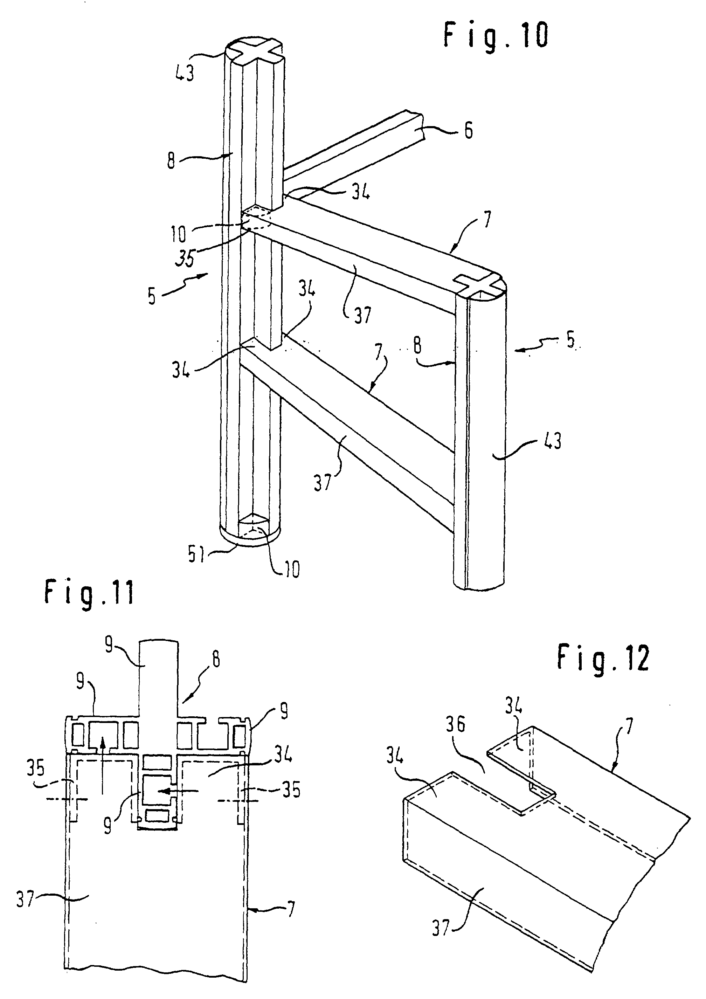

Fig. 10 zeigt eine weitere Variante eines Tragsystems mit einem Vertikalträger 5, welcher als rückseitiger Vertikalträger angeordnet ist, und einem vorderen Vertikalträger 5. Beide Vertikalträger 5 sind durch einen Querträger 7, welcher als Doppelquerträger 37 ausgebildet ist, verbunden. Dies erfolgt in der Weise, daß Befestigungsblöcke 10 in endseitigen Bereichen 34 des Querträgers 37 aufgenommen und dadurch von außen nicht sichtbar sind.

Aus Fig. 10 geht diese verdeckte Anordnung aus dem linken Endbereich 34 des oberen Doppelquerträgers 37 hervor. Diese Befestigungsanordnung ist vorteilhaft, wenn Abdeckungen 43 angebracht werden sollen. Das vordere Kreuzprofil 8 ist mit einer halbrunden Abdeckung 43 versehen.

In einer schrägen diagonalen Anordnung ist ein unterer Querträger 7, der ebenfalls als ein besonders stabiler Doppelquerträger 37 ausgebildet ist, befestigt. Die Befestigung dieses Querträgers 7 kann sowohl mit Befestigungsblöcken 10 als auch mit Winkelelementen 35 erfolgen, welche in Fig. 11 gezeigt sind. Aus Fig. 10 geht hervor, daß die Befestigungsblöcke 10 auch bodenseitig angeordnet sein können, um beispielsweise eine Bodenplatte 51 am Kreuzprofil 8 fixieren zu können.

Die Winkelelemente 35 gemäß Fig. 11 dienen einer alternativen Befestigung eines Doppelquerträgers 37. Dieser Doppelquerträger 37 hat zur Aufnahme eines Profilschenkels 9 des Kreuzprofils 8 eine mittlere Aussparung 36. Die Winkelelemente 35 werden in dem Doppelquerträger 37 angeschweißt oder angeschraubt, was mit gestrichelten Linien dargestellt ist. Die Befestigung kann direkt oder indirekt mit darunter angeordneten Befestigungsblöcken 10 (nicht dargestellt) sowie mit Befestigungselementen 26 erfolgen, welche, wie die Pfeile andeuten, bis in die T-Nuten 24 reichen und dort lagefixiert werden.

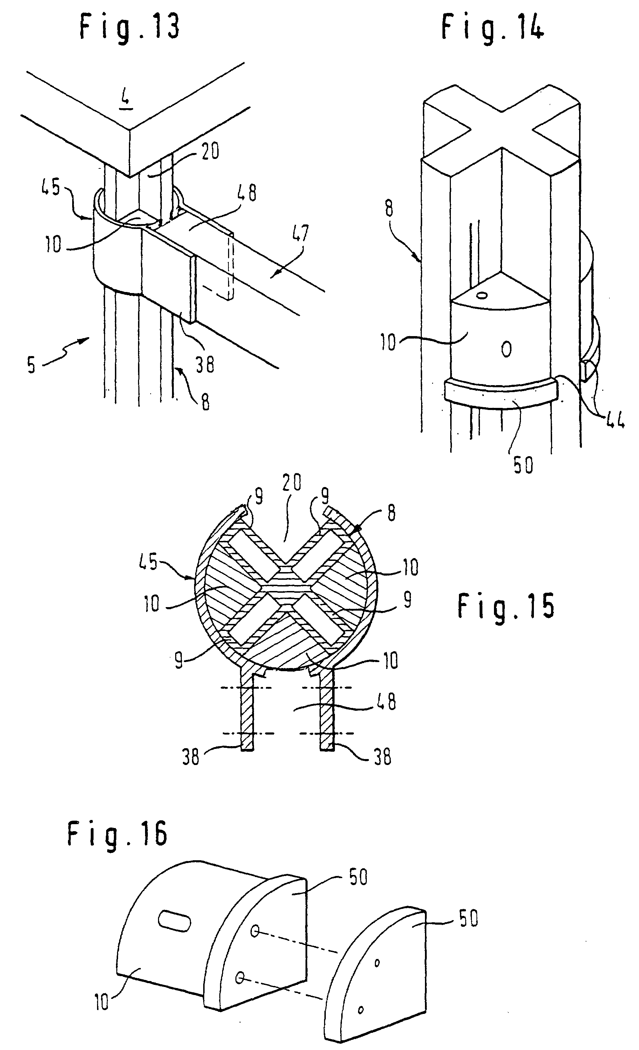

Figur 13 zeigt einen Kantenbereich eines Werkstattisches 4 im Bereich eines vorderen Vertikalträgers 5. Dieser Vertikalträger 5 ist wiederum aus einem Kreuzprofil 8 gebildet, in dessen Zwischenräumen 20 jeweils ein Befestigungsblock 10 fixiert ist. Um eine Strebe 47 als Teil eines weiteren Möbelelementes, beispielsweise einer zweiten Tischebene, an dem Vertikalträger 5 zu befestigen, ist ein Adapter 45 vorgesehen, welcher den Vertikalträger 5 im Bereich der Befestigungsblöcke 10 nahezu vollständig umgreift.

Figur 15 zeigt eine Schnittdarstellung, aus welcher hervorgeht, daß drei Zwischenräume 20 bzw. Befestigungsblöcke 10 und die Profilschenkel 9 des Kreuzprofils 8 von dem klammer- oder hülsenartigen Adapter 45 umgriffen werden. Die zusätzliche Strebe 47 wird mit ihrem Endbereich in einem Aufnahmebereich 48 des Adapters 45 aufgenommen und befestigt, wobei der Aufnahmebereich 48 von zwei parallel zueinander angeordneten Befestigungsflanschen 38 gebildet wird.

Besonders vorteilhaft ist eine drehbare Anordnung des Adapters 45 am Vertikalträger 5. Zu deren Realisierung ist es zweckmäßig, die Befestigungsblöcke 10 mit einem Basiselement 50 zu versehen (s. Fig. 14 und 16).

Figur 16 zeigt eine mögliche Befestigung eines Basiselementes 50 an einem Befestigungsblock 10. Zur Abstützung und Sicherung der hülsenartigen Adaptereinrichtung 45 ist es zweckmäßig, wenn das Basiselement 50 einen radial überstehenden Bereich 44 aufweist (Fig. 14). Es ist dann eine sichere und stabile, frei wählbare Ausrichtung und/oder drehbare Anordnung eines weiteren Möbelelementes, eines Trägers oder eines Ausstattungsteils für einen Arbeitstisch besonders einfach und rasch möglich.

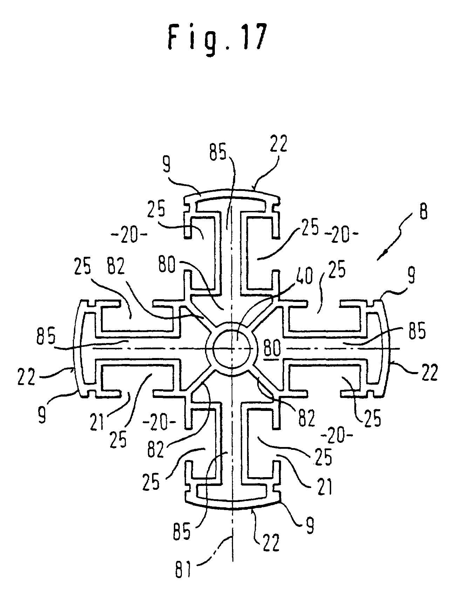

In Fig. 17 ist ein alternativ ausgebildetes Kreuzprofil 8 in einer Querschnittsdarstellung gezeigt. Die vier Profilschenkel 9 sind identisch ausgebildet, und die Mittenbohrung 40, welche einen kreisrunden Querschnitt aufweist, ist in einem Profilraum 80, welcher nahezu quadratisch ausgebildet ist, über Diagonalverstrebungen 82 gehalten.

Während die Kreuzprofile der vorangegangenen Figuren in ihren einen rechten Winkel bildenden Profilschenkeln 9 jeweils eine T-Nut 25 als Befestigungsöffnung für die Befestigungsblöcke 10 und/oder Vertikalträger 5, Horizontalträger 6 und/oder Querträger 7 aufweisen, sind an den Profilschenkeln 9 des Kreuzprofils gemäß Fig. 17 jeweils zwei T-Nuten 25 vorgesehen. Einem Zwischenraum 20, welcher von jeweils zwei Profilschenkeln 9 begrenzt wird, sind jeweils zwei T-Nuten 25 mit den durchgehenden Nutöffnungen 21 zugeordnet. Ein Befestigungsblock 10 (siehe Fig. 1 bis 5 und Fig. 13 bis 16) und/oder ein Horizontalträger 6, ein Querträger 7 oder ein Doppelquerträger 37 können somit befestigt werden, indem wahlweise ein Befestigungselement in einer T-Nut 25 oder aber zwei Befestigungselemente in den zwei T-Nuten 25 eines Zwischenraumes 20 verwendet werden. Es ist somit eine verbesserte Gestaltungsmöglichkeit und eine höhere Stabilität bei den direkten und/oder indirekten Befestigungen von Konstruktionselementen erreichbar.

Ein weiterer Vorteil des Kreuzprofils 8 gemäß Fig. 17 besteht darin, daß mit dem quadratischen Profilraum 80 und einem Profilschenkel-Hohlraum 85, welcher bis zu den konvexen Stirnflächen 22 jedes Profilschenkels 9 reicht, ein gewichtsreduziertes Profil geschaffen ist, welches bei einer außerordentlich hohen Stabilität einen besonders geringen Materialeinsatz erfordert.

## Patentansprüche

1. Tragsystem für Arbeitsmöbel, insbesondere Werkstattmöbel, mit Vertikalträgern (5) und Horizontalträgern (6) und Querträgern (7) zwischen den Vertikalträgern (5), wobei wenigstens die Vertikalträger (5) aus einem Kreuzprofil (8) mit im Querschnitt senkrecht zueinander angeordneten Profilschenkeln (9) und Zwischenräumen (20) im Querschnitt zwischen jeweils zwei Profilschenkeln (9) gebildet sind und in den Zwischenräumen (20) die Horizontalträger (6), Querträger (7) und weitere Möbelelemente aufgenommen und mit Hilfe von Befestigungselementen (26) direkt an den Vertikalträgern (5) fixierbar sind,
**dadurch gekennzeichnet,**
**dass** die Profilschenkel (9) des Kreuzprofils (8) in deren Längsrichtung T-Nuten (25) mit Nutöffnungen (21) als Befestigungsöffnungen (24) für die Befestigungselemente (26) aufweisen,
**dass** in den Zwischenräumen (20) Befestigungsblöcke (10) aufgenommen sind, über welche die Horizontalträger (6), Querträger (7) und die weiteren Möbelelemente zusätzlich indirekt an den Vertikalträgern (7) fixierbar sind, und
**dass** die Befestigungsblöcke (20) mit Hilfe der Befestigungselemente (26) in den T-Nuten (25) der Profilschenkel (9) fixierbar sind.

2. Tragsystem nach Anspruch 1,
**dadurch gekennzeichnet,**
**dass** die Befestigungsblöcke (10) in den Zwischenräumen (20) in einer horizontalen und vertikalen Anordnung positionierbar sind.

3. Tragsystem nach Anspruch 1 oder 2,
**dadurch gekennzeichnet,**
**dass** die Profilschenkel (9) des Kreuzprofils (8) mit konvexen Stirnflächen (22) und die in den Zwischenräumen (20) horizontal angeordneten Befestigungsblöcke (10), mit konvexen Außenflächen (11) ausgebildet sind, wobei die Stirnflächen (22) der Profilschenkel (9) und die Außenflächen (11) der in den Zwischenräumen (20) formschlüssig aufgenommenen, horizontal angeordneten Befestigungsblöcke (10) eine kreisrunde Außenkontur des Vertikalträgers (5) bilden.

4. Tragsystem nach einem der vorhergehenden Ansprüche,
**dadurch gekennzeichnet,**
**dass** als Befestigungselemente (26) Befestigungsschrauben vorgesehen sind, welche in den Nutöffnungen (21) der T-Nuten (25) zur lösbaren und stufenlos höhenverstellbaren Halterung der Horizontalträger (6), Querträger (7) und/oder der Befestigungsblöcke (10) gesichert sind.

5. Tragsystem nach einem der Ansprüche 2 bis 4,
**dadurch gekennzeichnet,**
**dass** in der horizontalen Anordnung der Befestigungsblöcke (10) wenigstens ein Befestigungselement (26) durch eine erste Bohrung (15), welche von der Außenfläche (11) durch eine Anlagefläche (12) bis in die T-Nut (21) reicht, geführt und gehalten ist, und in der vertikalen Anordnung ein Befestigungselement (26) durch eine zweite Bohrung (16) geführt ist, welche diametral zu der ersten Bohrung (15) und zwischen zwei Parallelflächen (17, 18) verläuft.

6. Tragsystem nach einem der Ansprüche 4 oder 5,
**dadurch gekennzeichnet,**
**dass** die T-Nuten (25) der Profilschenkel (9) derart angeordnet sind, dass in jedem Zwischenraum (20) wenigstens eine Nutöffnung (21) angeordnet ist.

7. Tragsystem nach einem der vorhergehenden Ansprüche,
**dadurch gekennzeichnet,**
**dass** die Befestigungsblöcke (10) mit Halteelementen (19) versehen sind, welche zum Eingriff in komplementäre Ausnehmungen der Horizontalträger (6), Querträger (7) oder Möbelelemente ausgebildet sind.

8. Tragsystem nach einem der Ansprüche 5 bis 7,
**dadurch gekennzeichnet,**
**dass** die Befestigungsblöcke (10) im Bereich der Parallelflächen (17, 18) Bohrungen (31) zur lösbaren Aufnahme von Halteelementen (19) aufweisen, welche als Drehachsen, z.B. als Zapfen oder Bolzen, für schwenkbare Möbelelemente (32) ausgebildet sind.

9. Tragsystem nach Anspruch 8,
**dadurch gekennzeichnet,**
**dass** die Halteelemente (19) im wesentlichen auf der Winkelhalbierenden der Parallelflächen (17, 18) der Befestigungsblöcke (10) angeordnet sind und dass ein Möbelelement (32), welches zwischen zwei Befestigungsblöcken (10) mit Halteelementen (19) angeordnet ist, einen abgerundeten Stirnbereich (33) aufweist, und in einem Bereich von etwa 90° verschwenkbar ist.

10. Tragsystem nach einem der vorhergehenden Ansprüche,
**dadurch gekennzeichnet,**
**dass** die Horizontalträger (6) und/oder Querträger (7) mit Endbereichen (34) in den Zwischenräumen (20) angeordnet und stirnseitig oder seitlich an den Profilschenkeln (9) befestigt sind (Fig. 6 und Fig. 7).

11. Tragsystem nach einem der vorhergehenden Ansprüche,
**dadurch gekennzeichnet,**
**dass** die Befestigungsblöcke (10) in horizontaler Anordnung in den Horizontal- und Querträgern (5, 6) oder Möbelelementen verdeckt angeordnet und fixiert sind.

12. Tragsystem nach einem der vorhergehenden Ansprüche,
**dadurch gekennzeichnet,**
**dass** das Kreuzprofil (8) eine Mittenbohrung (40) aufweist und dass die Profilschenkel (9) radial außen mit Längsnuten (41) zur Aufnahme einer Abdeckung (43), insbesondere einer einklemmbaren oder einrastbaren halbkreisförmigen Abdeckung, versehen sind.

13. Tragsystem nach einem der vorhergehenden Ansprüche,
**dadurch gekennzeichnet,**
**dass** zur Anordnung von Möbelelementen, z.B. weiteren Streben (47), Adapter (45) vorgesehen sind, welche das Kreuzprofil (8), insbesondere im Bereich von fixierten Befestigungsblöcken (10), form- und kraftschlüssig umgeben und am Kreuzprofil (8) gehalten sind.

14. Tragsystem nach Anspruch 13,
**dadurch gekennzeichnet,**
**dass** der Adapter (45) hülsen- oder klammerartig ausgebildet ist und mit einem Aufnahmebereich (48) für ein Möbelelement oder für eine Strebe (47) und dergleichen versehen ist.

15. Tragsystem nach einem der vorhergehenden Ansprüche,
**dadurch gekennzeichnet,**
**dass** an den Kreuzprofilen (8), insbesondere im Bereich der Befestigungsblöcke (10) Adapter (45) frei drehbar und höhenverstellbar befestigt sind und dass die Adapter (45) über den gesamten Umfang eines Kreuzprofils (8) reichen oder wenigstens ein Zwischenraum (20) des Kreuzprofils (8) frei zugänglich und insbesondere als Kabelkanal (49) eingesetzt ist, wobei Kabelhalter (46) in den Befestigungsöffnungen (24) der Profilschenkel (9) fixierbar sind.

16. Tragsystem nach einem der vorhergehenden Ansprüche,
**dadurch gekennzeichnet,**
**dass** zur Aufnahme großer Lasten Basiselemente (50) vorgesehen sind, welche unterhalb der Befestigungsblöcke (10) befestigt und insbesondere bei Anordnung von verschwenkbaren Adaptern (45) mit einem radialen Überstand (44) versehen sind.

17. Tragsytem nach einem der vorhergehenden Ansprüche,
**dadurch gekennzeichnet,**
**dass** das Kreuzprofil (8) und/oder die Horizontalträger (6) und/oder die Querträger (7) aus Aluminium und insbesondere als Aluminiumstrangpreßprofil gefertigt und die Befestigungsblöcke (10) als Gußstücke ausgebildet sind.

## Claims

1. Support system for workplace furniture, particularly workshop furniture, with vertical girders (5) and horizontal girders (6) and transverse girders (7) between the vertical girders (5), wherein at least the vertical girders (5) are formed from a cross profile (8) having in cross-section perpendicularly arranged profile legs (9) and interspaces (20) in cross-section between in each case two profile legs (9) and horizontal girders (6), transverse girders (7) and further furniture components are retained and can be directly fixed with the aid of fixing elements (26) to the vertical girders (5),
**characterized in that**
the profile legs (9) of the cross profile (8) are longitudinally provided with T-slots (25) having as fixing openings (24) slot openings (21) for the fixing elements (26),
that fixing blocks (10) are retained in the interspaces (20) with which the horizontal girders (6), transverse girders (7) and the further furniture components can be in addition indirectly fixed to the vertical girders (7) and
that the fixing blocks (10) can be fixed in the T-slots (25) of the profile legs (9) with the aid of the fixing elements (26).

2. Support system according to claim 1,
**characterized in that**
the fixing blocks (10) can be positioned in the interspaces (20) in a horizontal and vertical arrangement.

3. Support system according to claim 1 or 2,
**characterized in that**
the profile legs (9) of the cross profile (8) are constructed with convex end faces (22) and the fixing blocks (10) arranged horizontally in the interspaces (20) with convex outer faces (11), wherein the end faces (22) of the profile legs (9) and the outer faces (11) of the horizontally positioned fixing blocks (10) positively received in the interspaces (20), form a circular outer contour of the vertical girder (5).

4. Support system according to one of the preceding claims,
**characterized in that**
as fixing elements (26) are provided fixing screws which are secured for detachable, continuously vertically adjustable retention of the horizontal girders (6), transverse girders (7) and fixing blocks (10) in the slot openings (21) of the T-slots (25).

5. Support system according to one of the claims 2 to 4,
**characterized in that**
in the horizontal arrangement of the fixing blocks (10) at least one fixing element (26) is guided and held by a first bore (15) extending from the outer face (11) through a contact surface (12) and into the T-slot (21) and in a vertical arrangement a fixing element (26) is guided through a second bore (16), which runs diametrically to the first bore (15) and between two parallel faces (17, 18).

6. Support system according to one of the claims 4 or 5,
**characterized in that**
the T-slots (25) of the profile legs (9) are so arranged that at least one slot opening (21) is located in each interspace (20).

7. Support system according to one of the preceding claims,
**characterized in that**
fixing blocks (10) with holding elements (19) are provided constructed for engaging in complimentary recesses of the horizontal girders (6), transverse girders (7) or furniture components.

8. Support system according to one of the claims 5 to 7,
**characterized in that**
the fixing blocks (10) have in the region of parallel faces (17, 18) bores (31) for the detachable reception of holding elements (19), which are constructed as pivot pins, e.g. as lugs or bolts, for pivotable furniture components (32).

9. Support system according to claim 8,
**characterized in that**
the holding elements (19) are arranged substantially on the angle bisector of the parallel faces (17, 18) of the fixing blocks (10) and that a furniture component (32) located between two fixing blocks (10) with holding elements (19) has a rounded end region (33) and is pivotable in a range of approximately 90° .

10. Support system according to one of the preceding claims,
**characterized in that**
the horizontal girders (6) and/or transverse girders (7) with end regions (34) are located in the interspaces (20) and are frontally or laterally fixed to the profile legs (9) (figs. 6 and 7).

11. Support system according to one of the preceding claims,
**characterized in that**
the fixing blocks (10) in horizontal arrangement are positioned in concealed manner and fixed in the horizontal and transverse girders (5, 6) or furniture components.

12. Support system according to one of the preceding claims,
**characterized in that**
the cross profile (8) has a centre bore (40) and that the profile legs (9) are radially outwardly provided with longitudinal grooves (41) for receiving a cover (43), particularly a clippable or lockable semicircular cover.

13. Support system according to one of the preceding claims,
**characterized in that**
for the arrangement of furniture components, e.g. further braces (47), adaptors (45) are provided, which positively and non-positively surround the cross profile (8), particularly in the area of the fixed fixing blocks (10) and are retained on the cross profile (8).

14. Support system according to claim 13,
**characterized in that**
the adaptor (45) is constructed in sleeve or clip-like manner and is provided with a reception area (48) for a furniture component or a brace (47), etc.

15. Support system according to one of the preceding claims,
**characterized in that**
to the cross profiles (8), particularly in the vicinity of the fixing blocks (10) adaptors (45) are fixed in freely rotatable and vertically adjustable manner and that the adaptors (45) extend over the entire circumference of a cross profile (8) or at least one interspace (20) of the cross profile (8) is freely accessible and in particular used as a cable duct (49), wherein cable mountings (46) can be fixed in the fixing openings (24) of the profile legs (9).

16. Support system according to one of the preceding claims,
**characterized in that**
for the reception of high loads base elements (50) are provided, which are fixed below the fixing blocks (10) and are provided with a radial projecting length (44), particularly for arrangement of pivotable adaptors (45).

17. Support system according to one of the preceding claims,
**characterized in that**
the cross profile (8) and/or horizontal girders (6) and/or transverse girders (7) are made from aluminium, particularly as extruded aluminium parts and the fixing blocks (10) are constructed as castings.

## Revendications

1. Structure porteuse pour meubles de travail, en particulier des meubles d'atelier, avec des supports verticaux (5) et des supports horizontaux (6) et des supports transversaux (7) entre les supports verticaux (5), au moins les supports verticaux (5) étant formés d'un profilé cruciforme (8) avec des ailes (9) de profilé perpendiculaires les unes aux autres en section transversale et des espaces (20) en section transversale entre chaque deux ailes (9) de profilé et les supports horizontaux (6), les supports transversaux (7) et d'autres éléments de meuble étant logés dans les espaces (20) et pouvant être fixés directement aux supports verticaux (5) à l'aide d'éléments de fixation (26),
**caractérisée**
**en ce que** les ailes (9) du profilé cruciforme (8) présentent dans leur direction longitudinale des rainures en T (25) avec des ouvertures (21) pour les rainures servant d'ouvertures de fixation (24) pour les éléments de fixation (26),
**en ce que** des blocs de fixation (10) sont logés dans les espaces (20), blocs par l'intermédiaire desquels les supports horizontaux (6), les supports transversaux (7) et les autres éléments de meuble peuvent être fixés en plus indirectement aux supports verticaux (5), et
**en ce que** les blocs de fixation (20) peuvent être fixés dans les rainures en T (25) des ailes (9) de profilé à l'aide des éléments de fixation (26).

2. Structure porteuse selon la Revendication 1,
**caractérisée**
**en ce que** les blocs de fixation (10) sont positionnables dans les espaces (20) dans une disposition horizontale et verticale.

3. Structure porteuse selon la Revendication 1 ou 2,
**caractérisée**
**en ce que** les ailes (9) du profilé cruciforme (8) sont formées avec des surfaces frontales convexes (22) et les blocs de fixation (10) placés horizontalement dans les espaces (20) sont formés avec des surfaces extérieures (11) convexes, les surfaces frontales (22) des ailes (9) de profilé et les surfaces extérieures (11) des blocs de fixation (10) disposés horizontalement et logés par engagement positif dans les espaces (20) formant un contour extérieur circulaire du support vertical (5).

4. Structure porteuse selon l'une quelconque des Revendications précédentes,
**caractérisée**
**en ce qu'**il est prévu comme éléments de fixation (26) des vis de fixation qui sont fixées dans les ouvertures (21) des rainures en T (25) pour tenir les supports horizontaux (6), les supports transversaux (7) et/ou les blocs de fixation (10) de manière amovible et réglable en hauteur.

5. Structure porteuse selon l'une quelconque des Revendications 2 à 4,
**caractérisée**
**en ce que,** dans la disposition horizontale des blocs de fixation (10), au moins un élément de fixation (26) est guidé et tenu par un premier perçage (15) qui va de la surface extérieure (11) jusque dans la rainure en T (21) en traversant une surface d'appui (12), et dans la disposition verticale, un élément de fixation (26) est guidé par un deuxième perçage (16) qui s'étend diamétralement au premier perçage (15) et entre deux surfaces parallèles (17, 18).

6. Structure porteuse selon l'une quelconque des Revendications 4 ou 5,
**caractérisée**
**en ce que** les rainures en T (25) des ailes (9) de profilé sont disposées de telle manière qu'au moin une ouverture (21) de rainure se trouve dans chaque espace (20).

7. Structure porteuse selon l'une quelconque des Revendication précédentes,
**caractérisée**
**en ce que** les blocs de fixation (10) sont munis d'éléments de retenue (19) qui sont configurés pour se mettre en prise dans des évidements complémentaires des supports horizontaux (6), des supports transversaux (7) ou d'éléments de meuble.

8. Structure porteuse selon l'une quelconque des Revendications 5 à 7,
**caractérisée**
**en ce que** les blocs de fixation (10) présentent au niveau des surfaces parallèles (17, 18) des perçages (31) pour recevoir de manière amovible des éléments de retenue (19) qui sont configurés en axes de rotation, par exemple en tenons ou en boulons, pour des élément de meuble pivotants (32).

9. Structure porteuse selon la Revendication 8,
**caractérisée**
**en ce que** les éléments de retenue (19) sont disposés pour l'essentiel sur la bissectrice des surfaces parallèles (17, 18) des blocs de fixation (10) et
**en ce qu'**un élément de meuble (32) qui est placé entre deux blocs de fixation (10) avec des éléments de retenue (19) présente une zone frontale arrondie (33) et peut pivoter sur une plage d'environ 90°.

10. Structure porteuse selon l'une quelconque des Revendications précédentes,
**caractérisée**
**en ce que** les supports horizontaux (6) et/ou les supports transversaux (7) sont placés avec des zones d'extrémité (34) dans les espaces (20) et sont fixés du côté frontal ou latéralement sur les ailes de profilé (9) (Fig. 6 et Fig. 7).

11. Structure porteuse selon l'une quelconque des Revendications précédentes,
**caractérisée**
**en ce que** les blocs de fixation (10) sont placés et fixés en disposition horizontale, cachés dans les supports horizontaux et transversaux (5, 6) ou dans les éléments de meuble.

12. Structure porteuse selon l'une quelconque des Revendication précédents,
**caractérisée**
**en ce que** le profilé cruciforme (8) présente un perçage central (40) et
**en ce que** les ailes de profilé (9) sont munies, à l'extérieur dans le sens radial, de rainures longitudinales (41) destinées à recevoir une fermeture (43), en particulier encastrable ou encliquetable de forme semicirculaire.

13. Structure porteuse selon l'une quelconque des Revendication précédentes,
**caractérisée**
**en ce que,** pour l'agencement d'éléments de meuble, par exemple d'autres contrefiches (47), il est prévu des adaptateurs (45), qui entourent par adhérence et par engagement positif le profilé cruciforme (8), en particulier au niveau de blocs de fixation (10) fixés, et sont tenus sur le profilé cruciforme (8).

14. Structure porteuse selon la revendication 13,
**caractérisée**
**en ce que** l'adaptateur (45) est conformé à la manière d'une douille ou d'un étrier et est muni d'une zone de réception (48) pour un élément de meuble ou pour une contrefiche (47) et analogue.

15. Structure porteuse selon l'une quelconque des Revendications précédentes,
**caractérisée**
**en ce que,** sur les profilés cruciformes (8), en particulier au niveau des blocs de fixation (10), des adaptateurs (45) sont fixés de manière librement rotative et réglable en hauteur et
**en ce que** les adaptateurs (45) s'étendent sur toute la périphérie d'un profilé cruciforme (8) ou au moins un espace (20) du profilé cruciforme (8) est librement accessible et sert en particulier de chemin de câble (49), des supports de câbles (46) pouvant être fixés dans les ouvertures de fixation (24) des ailes (9) des profilés.

16. Structure porteuse selon l'une quelconque des Revendication précédentes,
**caractérisée**
**en ce que,** pour supporter des charges importantes, il est prévu des éléments de base (50), qui sont fixés au-dessous des blocs de fixation (10) et sont munis, en particulier dans le cas d'un système d'adaptateurs pivotants (45), d'une saillie radiale (44).

17. Structure porteuse selon l'une quelconque des Revendication précédentes,
**caractérisée**
**en ce que** le profilé cruciforme (8) et/ou les supports horizontaux (6) et/ou les supports verticaux (7) sont fabriqués en aluminium et en particulier sous forme de profilés d'aluminium extrudé et les blocs de fixation (10) sont fabriqués sous la forme de pièces moulées.
